# FASCICULE DE BREVET EUROPEEN

(11) **EP 1 431 644 B1**
(45) Date de publication et mention de la délivrance du brevet: **01.03.2006**
(21) Numéro de dépôt: 03293255.0
(22) Date de dépôt: 19.12.2003
(51) Int. Cl.: F16L 19/02, F16L 33/22

(54) **Dispositif de raccordement étanche entre un tuyau et un corps**
Dichte Verbindung zwischen einem Schlauch und einem Körper
Device for sealed connection between a pipe and a body

(30) Priorité: 20.12.2002 FR 0216315
(43) Date de publication de la demande: 23.06.2004
(73) Titulaire: Renault s.a.s., 92100 Boulogne Billancourt (FR)
(72) Inventeur: Burgat, Emmanuel, 94500 Chanpigny (FR); Dupouy, Claude, 75019 Paris (FR)

(56) Documents cités:
- DE-A- 2 817 438
- FR-A- 2 033 643
- US-A- 2 463 336
- US-A- 3 025 086
- US-A- 5 553 902

## Description

L'invention concerne un dispositif de raccordement étanche entre un tuyau et un corps, pour un organe d'admission de fluide d'un véhicule automobile, notamment pour la circulation d'un fluide sous pression.

De tels raccords sont par exemple utilisés au niveau du tuyau d'alimentation d'huile d'un turbocompresseur de véhicule automobile.

Pour une telle utilisation, on connaît un raccord étanche entre un tuyau et l'orifice d'un corps qui comporte un joint torique disposé à l'extrémité du tuyau. A cet effet, l'extrémité du tuyau comporte un pli formant une gorge pour recevoir le joint et un épaulement servant de butée pour un embout entourant le tuyau. Cet embout est vissé dans l'orifice et pousse l'extrémité du tuyau jusqu'à ce que le joint soit pressé contre le fond tronconique de l'orifice. L'extrémité de l'embout présente une partie cylindrique en butée contre l'épaulement du tuyau et une partie conique de diamètre supérieur en butée contre le fond tronconique de l'orifice. Cette partie est plus longue d'une longueur L que ladite partie tronconique. Cet agencement présente notamment l'inconvénient suivant : les longueurs minimale et maximale de la longueur L, correspondants aux limites de l'intervalle de tolérance, conduisent respectivement soit à une compression du joint insuffisante, soit à une compression du joint trop importante conduisant à sa détérioration. De sorte que, dans les deux cas, une fuite peut se produire. De plus, lors d'une compression trop importante du joint, la zone de contact entre l'embout et le fond de l'orifice est soumise au matage : les surfaces en contact subissent des déformations irréversibles qui peuvent altérer l'étanchéité de l'ensemble. En cas de détérioration de l'embout, il suffit de changer ce dernier en même temps que le joint. Le problème est plus complexe en cas de détérioration de l'orifice, le corps pouvant difficilement être changé. Dans ce cas, une pâte peut être appliquée sur la surface abîmée du fond de l'alésage pour assurer un meilleur contact avec l'embout. Un dispositif de raccordement étanche selon le préambule de la revendication 1 est décrit dans le document FR-A-2 033 643.

L'invention vise à pallier à ces inconvénients en proposant un dispositif de raccordement étanche simple, sans risque de détérioration des pièces, et pour lequel l'écrasement du joint peut être contrôlé. Ce dispositif présente l'avantage de pouvoir être utilisé sous pression et à température élevée.

A cet effet, l'objet de l'invention concerne un dispositif de raccordement étanche entre un tuyau et un orifice d'un corps pour un organe d'admission de fluide d'un véhicule automobile, ledit corps comportant un alésage fileté communiquant avec l'orifice pour la circulation du fluide, ledit dispositif comprenant un embout creux sensiblement cylindrique relié rigidement au tuyau, et une vis de maintien creuse sensiblement cylindrique entourant l'embout et destinée à être vissée dans ledit alésage afin de maintenir l'embout coaxialement dans ce dernier. Lorsque la vis de maintien est serrée, un épaulement de la vis de maintien est en butée contre le bord externe de l'alésage et l'extrémité inférieure de la vis dirigée vers l'orifice est en butée contre un épaulement de l'embout, les dimensions de la vis et de l'embout étant telles qu'un espace est ménagé entre l'extrémité libre de l'embout et ledit fond dudit alésage pour loger un joint annulaire. Le joint utilisé peut être un joint torique ou un joint rondelle (plat). L'épaisseur du joint est telle qu'il est alors en appui contre ladite extrémité libre de l'embout et le fond de l'alésage et que son écrasement est compris entre des valeurs minimale et maximale en deçà et au-delà desquelles le joint n'est plus étanche, respectivement. L'embout et le fond de l'alésage n'étant pas en contact suivant la direction axiale, leurs surfaces ne subissent plus d'altérations dues au matage. Les pièces s'usent moins et l'embout n'a pas besoin d'être remplacé à chaque changement du joint. Par ailleurs, la compression du joint est contrôlée en choisissant un joint d'épaisseur adaptée aux dimensions de l'espace.

Dans une variante, le joint annulaire est un joint plat.

L'extrémité libre de l'embout et le fond de l'alésage peuvent par ailleurs présenter des surfaces annulaires parallèles sur lesquelles le joint est en appui. De telles surfaces parallèles permettent de répartir les forces exercées sur le joint sur toute la surface de ce dernier, en particulier lorsqu'il s'agit d'un joint plat.

Dans une autre variante, le joint plat annulaire est en caoutchouc. Son écrasement peut alors être compris entre environ 10 et 30 % afin d'obtenir la meilleure étanchéité.

Le joint peut présenter un diamètre externe sensiblement inférieur au diamètre le plus faible de l'alésage du corps, ceci afin de faciliter l'introduction de l'embout et du joint dans l'alésage.

Dans une variante, l'épaisseur du joint est telle que son écrasement est sensiblement égal à la moitié de la somme des intervalles de tolérance pour les dimensions suivantes : distance entre le bord externe et le fond de l'alésage, distance entre l'épaulement de la vis et son extrémité inférieure, distance entre l'épaulement de l'embout et son extrémité libre. La possibilité de pouvoir choisir l'épaisseur du joint en fonction des intervalles de tolérance permet l'utilisation de machines outils courants pour l'usinage des pièces, et de réduire ainsi les coûts de fabrication.

Encore dans une variante, l'embout comprend notamment :
- une première partie cylindrique destinée à coopérer avec la vis de maintien et dont une extrémité est solidaire du tuyau,
- une deuxième partie cylindrique solidaire de la première partie, de diamètre supérieur à celle-ci et située à distance du tuyau, un épaulement étant formé par la surface de jonction entre les première et deuxième parties, apte à recevoir l'extrémité de la vis de maintien,
- une troisième partie cylindrique solidaire de la deuxième partie, de diamètre inférieur à celle-ci, destinée à recevoir le joint, la surface de jonction entre les deuxième et troisième parties formant une surface annulaire d'appui pour le joint.

L'extrémité libre de la troisième partie cylindrique de l'embout peut comprendre une saillie radiale dirigée vers l'extérieur de l'embout. Cette saillie permet notamment de retenir le joint sur l'embout. Le joint présente alors un diamètre interne inférieur au diamètre externe de ladite saillie.

Dans une variante, la vis de maintien comprend notamment :
- une première partie cylindrique portant un filetage sur sa paroi externe destiné à coopérer avec le filetage de l'alésage du corps,
- une deuxième partie cylindrique solidaire de la première partie, de diamètre supérieur à celle-ci, formant un épaulement d'appui contre le bord externe de l'alésage du corps.

Ainsi, l'embout et la vis de maintien sont des pièces sensiblement cylindriques de formes simples et d'usinage facile. Le dispositif de raccordement peut être rapidement mis en place ou changé.

L'invention est maintenant décrite en référence aux dessins annexés, non limitatifs, dans lesquels :
- la figure 1 est une vue en coupe longitudinale d'un dispositif de raccordement étanche entre un tuyau et l'orifice d'un corps selon l'invention ;
- la figure 2 est une vue en coupe longitudinale de l'embout et du joint du dispositif de la figure 1,
- la figure 3 est une vue en coupe longitudinale de la vis de maintien du dispositif de la figure 1.

Le dispositif de raccordement selon l'invention est destiné à assurer l'étanchéité entre un tuyau 10 et un corps 12. Il s'agit par exemple d'un tuyau d'alimentation d'huile pour un turbocompresseur.

Le corps 12 comporte notamment un alésage 14 en communication avec un orifice 16 pour la circulation d'un fluide. L'alésage 14 présente un filetage 18 sur une partie de sa surface. L'alésage présente une forme sensiblement cylindrique d'axe de révolution 20 et d'un diamètre supérieur au diamètre de l'orifice 16. Une surface d'appui 22 est ainsi forniée entre l'alésage 14 et l'orifice 16 du fait de la réduction du diamètre. Cette surface 22 forme le fond de l'alésage. Dans le mode de réalisation représenté, le fond 22 de l'alésage présente une forme tronconique avec un angle au sommet d'environ 120°. Cette forme est obtenue lors de l'usinage de l'alésage 14. Dans un autre mode de réalisation non représenté, cette surface d'appui 22 peut être perpendiculaire à l'axe de révolution 20 de l'alésage. On définit une longueur L1 entre le bord externe 19 de l'alésage et le fond 22 de l'alésage.

Le dispositif comprend un embout creux 24 relié rigidement au tuyau 10, un joint plat annulaire 26 et une vis de maintien creuse 28.

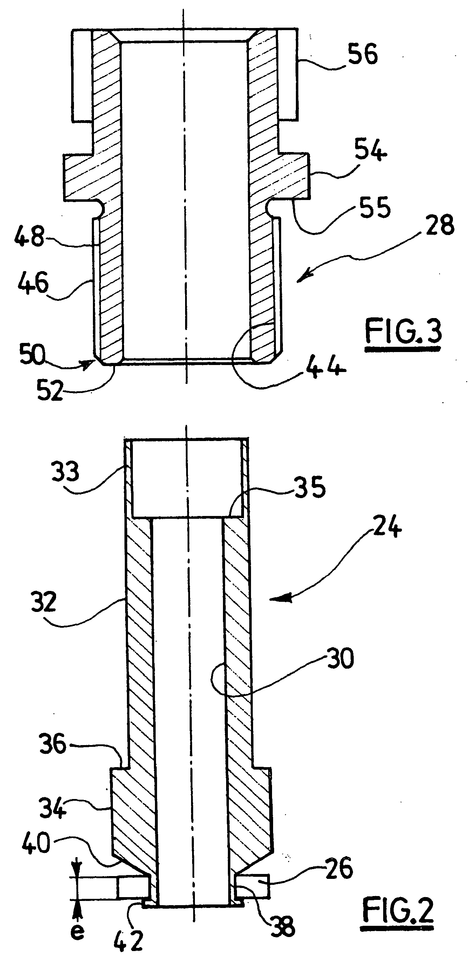

L'embout 24 est décrit en référence à la figure 2. Il présente une symétrie de révolution et des formes externe et interne cylindriques dans leur ensemble.

L'embout 24 comprend un alésage interne traversant 30 de forme cylindrique permettant la circulation du fluide.

L'embout 24 présente une première partie cylindrique 32 destinée à être insérée dans la vis de maintien et dont une extrémité 33 est reliée rigidement au tuyau 10. Le diamètre externe de cette partie est constant sur toute sa longueur. Au niveau de l'extrémité 33, l'alésage interne 30 présente un diamètre légèrement supérieur au diamètre externe du tuyau 10, afin que ce dernier puisse y être inséré. La liaison entre le tuyau et l'embout est réalisée par soudage, brasage, sertissage ou similaire. Le diamètre interne de l'alésage 30 présente ensuite un diamètre inférieur au tuyau, de sorte que la différence de diamètres forme une butée 35 empêchant le tuyau de pénétrer plus en avant dans l'embout lors de son montage.

L'embout présente une deuxième partie cylindrique 34 solidaire de la première partie 32, de diamètre supérieur à celle-ci de sorte qu'un épaulement 36 est formé par la surface de jonction entre les première et deuxième parties. Cet épaulement 36 s'étend dans un plan sensiblement perpendiculaire à l'axe de révolution des parties cylindriques.

L'embout présente une troisième partie cylindrique 38 solidaire de la deuxième partie 36, de diamètre inférieur à celle-ci. Cette partie 38 est destinée à recevoir le joint plat 26 lors du montage de l'embout. La surface de jonction entre les deuxième et troisième parties forme une surface annulaire d'appui 40. L'embout est réalisé de sorte que cette surface annulaire 40 soit sensiblement parallèle au fond 22 de l'alésage du corps. La surface annulaire présente ainsi une forme sensiblement tronconique, complémentaire de la forme du fond de l'alésage dans l'exemple décrit. On définit une longueur L3 entre la surface annulaire d'appui 40 et l'épaulement 36.

Enfin, le bord libre de la troisième partie cylindrique 38 comprend une saillie annulaire 42 radiale dirigée vers l'extérieur de l'embout.

Le joint plat 26, d'une épaisseur e, présente un diamètre externe inférieur au diamètre interne le plus petit de l'alésage du corps. Son diamètre interne est sensiblement égal au diamètre externe de la troisième partie 38 de l'embout et inférieur au diamètre de la saillie annulaire 42, de sorte qu'il est retenu par cette dernière et ne peut se dégager de l'embout accidentellement lors du montage du dispositif. Ce joint plat 26 est par exemple en caoutchouc.

La vis de maintien 28 est décrite en référence à la figure 3. Elle présente une symétrie de révolution et des formes externe et interne cylindriques dans leur ensemble.

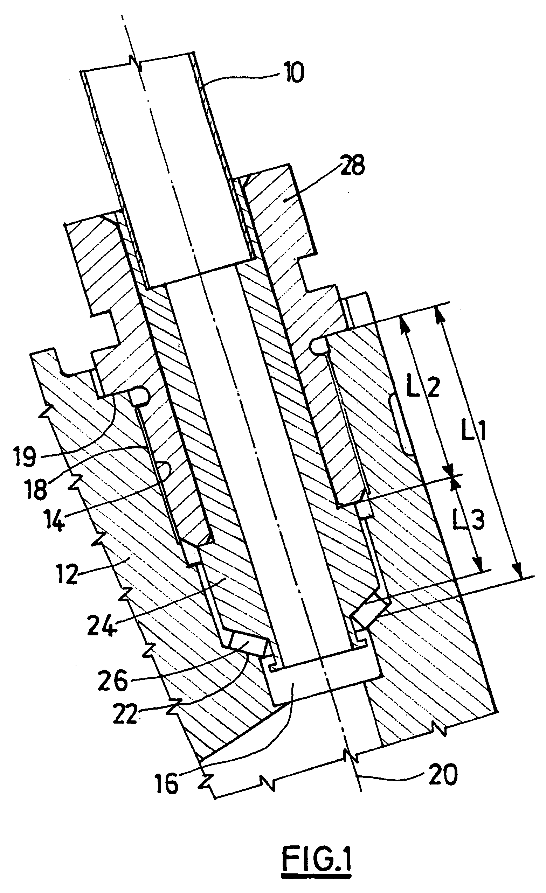

La vis 28 comprend un alésage interne traversant 44 de forme cylindrique destiné à recevoir la première partie cylindrique 32 de l'embout 24. La longueur de cet alésage 44 est sensiblement égale à la longueur de la première partie cylindrique 32 de l'embout (figure 1) et l'alésage 44 présente une forme complémentaire de la partie 32.

La vis 28 présente une première partie cylindrique 46 portant un filetage 48 sur sa paroi externe destiné à coopérer avec le filetage interne 18 de l'alésage 14 du corps.

La surface 52 de l'extrémité libre 50 de cette première partie est sensiblement perpendiculaire à son axe de révolution. Elle permet à la vis de prendre appui contre l'épaulement 36 de l'embout.

La vis 28 présente une deuxième partie cylindrique 54 formant un épaulement saillant radialement, solidaire de la première partie et de diamètre supérieur à celle-ci. Cet épaulement permet à la vis de prendre appui sur le bord externe 19 de l'alésage. La face inférieure 55 de l'épaulement est alors en appui contre ce bord externe 19 qui est perpendiculaire à l'axe de révolution de l'alésage. On définit une longueur L2 entre l'épaulement 54, et plus précisément sa face inférieure 55, et l'extrémité 50 de la vis, plus précisément sa surface 52.

Enfin, la vis 28 présente une partie hexagonale 56 à son autre extrémité, permettant le serrage et le desserrage de la vis par un outil, tel qu'une clé six pans par exemple.

La longueur de l'embout et de la vis et plus particulièrement, la somme des longueurs L2 et L3 est choisie inférieure à la longueur L1 de manière à ménager un espace entre la surface annulaire d'appui 40 et le fond 22 de l'alésage. Cet espace permet le logement du joint annulaire 26.

Le montage du dispositif est décrit ci-après.

Le tuyau 10 est introduit dans l'alésage 14 de la vis de maintien 28. L'extrémité du tuyau est ensuite introduite dans l'extrémité correspondante 33 de l'embout jusqu'à la butée 35 et soudée à celle-ci. La vis de maintien 28 est alors ramenée autour de l'embout 24, jusqu'à ce que la surface d'extrémité 52 de la vis soit en butée contre l'épaulement 36 de l'embout. Le joint plat 26 est placé sur la troisième partie cylindrique 38 de l'embout. L'ensemble est alors introduit dans l'alésage 14 du corps en vissant la vis de maintien 28 dans cet alésage, jusqu'à ce que l'épaulement 54 de la vis soit en contact avec le bord externe 19 de l'alésage. Le joint 26 est ainsi comprimé progressivement entre la surface d'appui 40 de l'embout et le fond 22 de l'alésage du corps. Ces deux surfaces étant parallèles, la compression du joint est sensiblement uniforme et répartie sur toute sa surface, ce qui contribue à augmenter la durée de vie du joint. La vis de maintien est enfin serrée et bloquée avec une clé.

L'épaisseur e du joint est choisie de sorte que son écrasement soit compris entre environ 10 et 30 % (dans le cas d'un joint caoutchouc). Ces valeurs correspondent respectivement à la valeur minimale d'écrasement du joint nécessaire pour obtenir une bonne étanchéité et à la valeur d'écrasement maximale au-delà de laquelle on observe une détérioration du joint et une perte d'étanchéité.

Afin que l'écrasement du joint reste dans cet intervalle, l'épaisseur du joint tient compte des intervalles de tolérance pour les dimensions suivantes suivant l'axe de révolution : distance L1 entre le bord externe 19 et le fond 22 de l'alésage du corps, distance L2 entre l'épaulement 54 et l'extrémité 55 de la vis de maintien, distance L3 entre l'épaulement 36 et la surface annulaire d'appui 40 de l'embout. L'écrasement est alors sensiblement égal à la moitié de la somme des intervalles de tolérance pour ces distances.

Cet agencement des pièces et du joint permet d'accepter des intervalles de tolérance larges obtenus avec des machines outils courants.

Une bonne étanchéité est ainsi obtenue avec des pièces de formes simples à réaliser, et qui peuvent être par conséquent facilement changées. Par ailleurs, l'alésage ne peut être détérioré par un serrage trop important de la vis de maintien.

Utilisé pour une alimentation en huile, ce dispositif permet de supporter une pression de l'ordre de 5 à 6 bars et une température pouvant atteindre 170°C.

Bien entendu, d'autres modes de réalisation peuvent être envisagés sans sortir du cadre de l'invention.

## Revendications

1. Dispositif de raccordement étanche entre un tuyau (10) et un orifice (16) d'un corps pour un organe d'admission de fluide d'un véhicule automobile, ledit corps comportant un alésage (14) fileté communiquant avec l'orifice pour la circulation du fluide, ledit dispositif comprenant un embout creux (24) sensiblement cylindrique relié rigidement au tuyau (10), et une vis de maintien creuse (28) sensiblement cylindrique entourant l'embout (24) et destinée à être vissée dans ledit alésage (14) afin de maintenir l'embout (24) coaxialement dans ce dernier, **caractérisé en ce que**, lorsque la vis de maintien est serrée, un épaulement (54) de la vis de maintien est en butée contre le bord externe (19) de l'alésage et l'extrémité inférieure (50) de la vis dirigée vers l'orifice est en butée contre un épaulement (36) de l'embout, les dimensions de la vis et de l'embout étant telles qu'un espace est ménagé entre l'extrémité libre de l'embout et ledit fond (22) dudit alésage pour loger un joint annulaire, et **en ce que** l'épaisseur du joint est telle qu'il est alors en appui contre ladite extrémité libre de l'embout et le fond (22) de l'alésage et que son écrasement est compris entre des valeurs minimale et maximale en deçà et au-delà desquelles le joint n'est plus étanche, respectivement.

2. Dispositif selon la revendication 1, **caractérisé en ce que** ladite extrémité libre de l'embout et le fond (22) de l'alésage présentent des surfaces annulaires parallèles destinées à recevoir le joint.

3. Dispositif selon l'une des revendications 1 ou 2, **caractérisé en ce que** le joint annulaire (26) est un joint plat.

4. Dispositif selon l'une des revendications 1 à 3, **caractérisé en ce que** le joint annulaire est en caoutchouc.

5. Dispositif selon la revendication 4, **caractérisé en ce que** l'écrasement du joint est compris entre environ 10 et 30 %.

6. Dispositif selon l'une des revendications 1 à 5, **caractérisé en ce que** le joint présente un diamètre externe sensiblement inférieur au diamètre le plus faible de l'alésage du corps.

7. Dispositif selon l'une des revendications 1 à 6, **caractérisé en ce que** l'extrémité libre de l'embout recevant le joint présente une forme tronconique.

8. Dispositif selon la revendication 7 **caractérisé en ce que** l'angle au sommet de la forme tronconique est d'environ 120°.

9. Dispositif selon l'une des revendications 1 à 8, **caractérisé en ce que** l'épaisseur du joint est telle que son écrasement est sensiblement égal à la moitié de la somme des intervalles de tolérance pour les dimensions suivantes : distance (L1) entre le bord externe et le fond de l'alésage, distance (L2) entre l'épaulement de la vis de maintien et son extrémité inférieure, distance (L3) entre l'épaulement de l'embout et son extrémité libre.

10. Dispositif selon l'une des revendications 1 à 9, **caractérisé en ce que** l'embout (24) comprend notamment :
- une première partie cylindrique (32) destinée à coopérer avec la vis de maintien (28) et dont une extrémité (33) est solidaire du tuyau,
- une deuxième partie cylindrique (34), de longueur L3, solidaire de la première partie (32), de diamètre supérieur à celle-ci et située à distance du tuyau, un épaulement (36) étant formé par la surface de jonction entre lesdites première et deuxième parties, apte à recevoir l'extrémité (50) de la vis de maintien,
- une troisième partie cylindrique (38) solidaire de la deuxième partie (34), de diamètre inférieur à celle-ci, destinée à recevoir le joint, la surface de jonction entre les deuxième et troisième parties formant une surface annulaire d'appui (40) pour le joint.

11. Dispositif selon la revendication 10, **caractérisé en ce que** l'extrémité libre de la troisième partie cylindrique de l'embout comprend une saillie radiale (42) dirigée vers l'extérieur de l'embout.

12. Dispositif selon la revendication 11, **caractérisé en ce que** le diamètre interne du joint est inférieur au diamètre externe de ladite saillie (42).

13. Dispositif selon l'une de revendications 1 à 12, **caractérisé en ce que** la vis de maintien (28) comprend notamment :
- une première partie cylindrique (46), de longueur L2, portant un filetage (48) sur sa paroi externe destiné à coopérer avec le filetage (18) de l'alésage (14) du corps,
- une deuxième partie cylindrique (54) solidaire de la première partie, de diamètre supérieur à celle-ci, formant l'épaulement d'appui contre le bord externe (19) de l'alésage du corps.

14. Dispositif selon l'une des revendications 1 à 13, **caractérisé en ce que** la vis de maintien (28) comprend en outre une partie (56) apte à permettre son serrage.

15. Dispositif selon l'une des revendications 9 à 14, **caractérisé en ce que** la somme des longueurs (L2) et (L3) est inférieure à la distance (L1) entre le bord externe et le fond de l'alésage.

## Claims

1. A leak-tight connection device between a tube (10) and an orifice (16) of a body for a fluid inlet member of an automobile vehicle, this body comprising a threaded bore (14) communicating with the orifice for the circulation of the fluid, the device comprising a hollow, substantially cylindrical connector (24) connected rigidly to the tube (10) and a hollow, substantially cylindrical retaining screw (28) surrounding the connector (24) and adapted to be screwed into the bore (14) in order to hold the connector (24) coaxially therein, **characterised in that** when the retaining screw is riglztened, a shoulder (54) of the retaining screw abuts against the outer edge (19) of the bore and the lower end (50) of the screw directed towards the orifice abuts against a shoulder (36) of the connector, the dimensions of the screw and the connector being such that a space is provided between the free end of the connector and the base (22) of the bore in order to house an annular joint, and **in that** the thickness of the joint is such that it then bears on the free end of the connector and the base (22) of the bore and its compression is comprised between minimum and maximum values, respectively below and above which the joint is no longer leak-tight.

2. A device as claimed in claim 1, **characterised in that** the free end of the connector and the base (22) of the bore comprise parallel annular surfaces adapted to receive the joint.

3. A device as claimed in one of claims 1 or 2, **characterised in that** the annular joint (26) is a flat joint.

4. A device as claimed in one of claims 1 to 3, **characterised in that** the annular joint is of rubber.

5. A device as claimed in claim 4, **characterised in that** the compression of the joint is between approximately 10 and 30%.

6. A device as claimed in one of claims 1 to 5, **characterised in that** the joint has an outer diameter substantially lower than the lowest diameter of the bore of the body.

7. A device as claimed in one of claims 1 to 6, **characterised in that** the free end of the connector receiving the joint has a frustoconical shape.

8. A device as claimed in claim 7, **characterised in that** the angle at the apex of the frustoconical shape is approximately 120°.

9. A device as claimed in one of claims 1 to 8, **characterised in that** the thickness of the joint is such that its compression is substantially equal to half the sum of the tolerance intervals for the following dimensions: distance (L1) between the outer edge and the base of the bore, distance (L2) between the shoulder of the retaining screw and its free end, distance (L3) between the shoulder of the connector and its free end.

10. A device as claimed in one of claims 1 to 9, **characterised in that** the connector (24) in particular comprises:
- a first cylindrical portion (32) adapted to cooperate with the retaining screw (28), one end (33) of which is rigid with the tube;
- a second cylindrical portion (34), of length (L3), rigid with the first portion (32), of greater diameter than this first portion and disposed spaced from the tube, a shoulder (36) being formed by the junction surface between the first and second portions, adapted to receive the end (50) of the retaining screw;
- a third cylindrical portion (38) rigid with the second portion (34), of a smaller diameter than this second portion, adapted to receive the joint, the junction surface between the second and third portions forming an annular bearing surface (40) for the joint.

11. A device as claimed in claim 10, **characterised in that** the free end of the third cylindrical portion of the connector comprises a radial projection (42) directed towards the exterior of the connector.

12. A device as claimed in claim 11, **characterised in that** the inner diameter of the joint is lower than the outer diameter of this projection (42).

13. A device as claimed in one of claims 1 to 12, **characterised in that** the retaining screw (28) in particular comprises:
- a first cylindrical portion (46), of length (L2), bearing a thread (48) on its outer wall adapted to cooperate with the thread (18) of the bore (14) of the body;
- a second cylindrical portion (54) rigid with the first portion, of greater diameter than this portion, forming a shoulder bearing against the outer edge (19) of the bore of the body.

14. A device as claimed in one of claims 1 to 13, **characterised in that** the retaining screw (28) further comprises a portion (56) adapted to enable its tightening.

15. A device as claimed in one of claims 9 to 14, **characterised in that** the sum of the lengths (L2) and (L3) is lower than the distance (L1) between the outer edge and the base of the bore.

## Patentansprüche

1. Dichte Anschlussvorrichtung zwischen einem Rohr (10) und einer Öffnung (16) eines Körpers für ein Einlassbauteil von Fluid eines Kraftfahrzeugs, wobei der Körper eine mit einem Gewinde versehene Bohrung (14) aufweist, welche mit der Öffnung für die Zirkulation von Fluid kommuniziert, wobei die Vorrichtung einen im Wesentlichen zylindrischen, hohlen Ansatz (24) aufweist, der starr mit dem Rohr (10) verbunden ist, und eine im Wesentlichen zylindrische, hohle Halteschraube (28), welche den Ansatz (24) umgibt, und welche dafür bestimmt ist, in die Bohrung (14) eingeschraubt zu werden, um den Ansatz (24) koaxial in dieser letzteren zu halten, **dadurch gekennzeichnet, dass**, wenn die Halteschraube angespannt ist, eine Schulter (54) der Halteschraube in Anschlag gegen den äußeren Rand (19) der Bohrung ist, und dass das untere Ende (50) der Schraube, das in Richtung zur Öffnung gerichtet ist, in Anschlag gegen eine Schulter (36) des Ansatzes ist, wobei die Abmessungen der Schraube und des Ansatzes derart sind, dass ein Raum zwischen dem freien Ende des Ansatzes und dem Boden (22) der Bohrung ausgespart ist, um eine ringförmige Dichtung unterzubringen, und dass die Dicke der Dichtung derart ist, dass sie somit in Anlage gegen das freie Ende des Ansatzes und dem Boden (22) der Bohrung ist, und dass ihre Quetschung zwischen dem minimalen und maximalen Wert enthalten ist, unterhalb dessen und oberhalb dessen die Dichtung jeweils nicht mehr dicht ist.

2. Vorrichtung nach Anspruch 1, **dadurch gekennzeichnet, dass** das freie Ende des Ansatzes und der Boden (22) der Bohrung ringförmige, parallele Oberflächen aufweisen, die dafür bestimmt sind, die Dichtung aufzunehmen.

3. Vorrichtung nach einem der Ansprüche 1 oder 2, **dadurch gekennzeichnet, dass** die ringförmige Dichtung (26) eine flache Dichtung ist.

4. Vorrichtung nach einem der Ansprüche 1 bis 3, **dadurch gekennzeichnet, dass** die ringförmige Dichtung aus Kautschuk ist.

5. Vorrichtung nach Anspruch 4, **dadurch gekennzeichnet, dass** die Quetschung der Dichtung zwischen in etwa 10 und 30 % enthalten ist.

6. Vorrichtung nach einem der Ansprüche 1 bis 5, **dadurch gekennzeichnet, dass** die Dichtung einen äußeren Durchmesser im Wesentlichen geringer zum schwächsten Durchmesser der Bohrung des Körpers aufweist.

7. Vorrichtung nach einem der Ansprüche 1 bis 6, **dadurch gekennzeichnet, dass** das freie Ende des Ansatzes, welcher die Dichtung aufnimmt, eine kegelstumpfförmige Form aufweist.

8. Vorrichtung nach Anspruch 7, **dadurch gekennzeichnet, dass** der Winkel an der Spitze der kegelstumpfförmigen Form in etwa 120° ist.

9. Vorrichtung nach einem der Ansprüche 1 bis 8, **dadurch gekennzeichnet, dass** die Dicke der Dichtung derart ist, dass ihre Quetschung im Wesentlichen gleich zu der Hälfte der Summe von Toleranzintervallen für die folgenden Abmessungen ist: Abstand (L1) zwischen dem äußeren Rand und dem Boden der Bohrung, Abstand (L2) zwischen der Schulter der Halteschraube und ihrem unteren Ende, Abstand (L3) zwischen der Schulter des Ansatzes und seinem freien Ende.

10. Vorrichtung nach einem der Ansprüche 1 bis 9, **dadurch gekennzeichnet, dass** der Ansatz (24) insbesondere aufweist:
- einen ersten zylindrischen Teil (32), der dafür bestimmt ist, mit der Halteschraube (28) zusammenzuwirken, und dessen eines Ende (33) fest mit dem Rohr verbunden ist,
- einen zweiten zylindrischen Teil (34) einer Länge (L3), der fest mit dem ersten Teil (32) verbunden ist, von einem größeren Durchmesser als diesem und angeordnet im Abstand von dem Rohr, eine Schulter (36), welche durch die Verbindungsoberfläche zwischen dem ersten und dem zweiten Teil gebildet ist, die fähig ist, das Ende (50) der Halteschraube zu empfangen,
- einen dritten zylindrischen Teil (38), der fest mit dem zweiten Teil (34) verbunden ist, von einem geringeren Durchmesser als diesem, der dafür bestimmt ist, die Dichtung aufzunehmen, wobei die Verbindungsoberfläche zwischen dem zweiten und dem dritten Teil eine ringförmige Abstützoberfläche (40) für die Dichtung bildet.

11. Vorrichtung nach Anspruch 10, **dadurch gekennzeichnet, dass** das freie Ende des dritten zylindrischen Teils des Ansatzes einen radialen Vorsprung (42) aufweist, der in Richtung nach außen von dem Ansatz gerichtet ist.

12. Vorrichtung nach Anspruch 11, **dadurch gekennzeichnet, dass** der innere Durchmesser der Dichtung geringer als der äußere Durchmesser des Vorsprungs (42) ist.

13. Vorrichtung nach einem der Ansprüche 1 bis 12, **dadurch gekennzeichnet, dass** die Halteschraube (28) insbesondere aufweist:
- einen ersten zylindrischen Teil (46) einer Länge (L2), der ein Gewinde (48) an seiner äußeren Wand trägt, das dafür bestimmt ist, mit dem Gewinde (18) der Bohrung (14) des Körpers zusammenzuwirken,
- einen zweiten zylindrischen Teil (54), der mit dem ersten Teil fest verbunden ist, von einem größeren Durchmesser als diesem, welcher die Abstützschulter gegen den äußeren Rand (19) der Bohrung des Körpers bildet.

14. Vorrichtung nach einem der Ansprüche 1 bis 13, **dadurch gekennzeichnet, dass** die Halteschraube (28) des Weiteren einen Teil (56) aufweist, der fähig ist, ihre Spannung zu erlauben.

15. Vorrichtung nach einem der Ansprüche 9 bis 14, **dadurch gekennzeichnet, dass** die Summe der Längen (L2) und (L3) geringer als der Abstand (L1) zwischen dem äußeren Rand und dem Boden der Bohrung ist.
